(19)

**Europäisches Patentamt**
**European Patent Office**
**Office européen des brevets**

(11) **EP 4 521 504 A1**

(12) **EUROPEAN PATENT APPLICATION**
published in accordance with Art. 153(4) EPC

(43) Date of publication:
**12.03.2025 Bulletin 2025/11**

(21) Application number: **23839548.7**

(22) Date of filing: **05.07.2023**

(51) International Patent Classification (IPC):
$H01M\ 10/052^{(2010.01)}$    $H01G\ 11/24^{(2013.01)}$
$H01G\ 11/42^{(2013.01)}$    $H01G\ 11/46^{(2013.01)}$
$H01M\ 4/131^{(2010.01)}$    $H01M\ 4/133^{(2010.01)}$
$H01M\ 4/505^{(2010.01)}$    $H01M\ 4/525^{(2010.01)}$
$H01M\ 4/587^{(2010.01)}$    $H01M\ 10/054^{(2010.01)}$

(52) Cooperative Patent Classification (CPC):
**H01G 11/24; H01G 11/42; H01G 11/46;**
**H01M 4/131; H01M 4/133; H01M 4/505;**
**H01M 4/525; H01M 4/587; H01M 10/052;**
**H01M 10/054;** Y02E 60/10

(86) International application number:
**PCT/JP2023/024925**

(87) International publication number:
**WO 2024/014376 (18.01.2024 Gazette 2024/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.07.2022 JP 2022111996**

(71) Applicant: **GS Yuasa International Ltd.**
**Kisshoin, Minami-ku,**
**Kyoto-shi, Kyoto 601-8520 (JP)**

(72) Inventors:
• **SEKIGUCHI, Taisei**
**Kyoto-shi, Kyoto 601-8520 (JP)**

• **NAKAI, Kenta**
**Kyoto-shi, Kyoto 601-8520 (JP)**
• **UEHIRA, Kenta**
**Kyoto-shi, Kyoto 601-8520 (JP)**
• **KANEKO, Takashi**
**Kyoto-shi, Kyoto 601-8520 (JP)**
• **YAMAKAWA, Yuto**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **POWER STORAGE ELEMENT**

(57) An energy storage device according to an aspect of the present invention includes an electrode assembly in which a positive electrode including a positive active material layer and a negative electrode including a negative active material layer are stacked with each other with a separator interposed therebetween, in which the positive active material layer contains a positive active material particle, and the positive active material particle has an internal porosity of 15% or less, and the negative active material layer contains a graphite particle, and the graphite particle has an internal porosity of 2% or less.

Fig. 1

EP 4 521 504 A1

Processed by Luminess, 75001 PARIS (FR)

**Description**

TECHNICAL FIELD

The present invention relates to an energy storage device.

BACKGROUND ART

Nonaqueous electrolyte secondary batteries typified by lithium ion secondary batteries are often used for electronic devices such as personal computers and communication terminals, motor vehicles, and the like, because the batteries are high in energy density. Capacitors such as lithium ion capacitors and electric double-layer capacitors and the like are also widely in use as energy storage devices except for the nonaqueous electrolyte secondary batteries.
The energy storage device generally includes an electrode assembly in which a positive electrode containing a positive active material and a negative electrode containing a negative active material are stacked with a separator interposed therebetween. Such an electrode assembly is housed together with an electrolyte in a case to construct an energy storage device. As a negative active material, a carbon material such as graphite is widely used (see Patent Documents 1 and 2).

PRIOR ART DOCUMENTS

PATENT DOCUMENTS

Patent Document 1: JP-A-2005-222933
Patent Document 2: JP-A-2017-069039

SUMMARY OF THE INVENTION

PROBLEMS TO BE SOLVED BY THE INVENTION

In the energy storage device, it is desirable that a decrease in input hardly occurs even when charge-discharge are repeated. The input refers to energy (power: W) that can be taken in per unit time by the energy storage device during charge. In other words, the input is input power during charge, and is an index indicating performance that enables efficient charge.
An object of the present invention is to provide an energy storage device having a high input retention ratio after a charge-discharge cycle.

MEANS FOR SOLVING THE PROBLEMS

An energy storage device according to an aspect of the present invention includes an electrode assembly in which a positive electrode including a positive active material layer and a negative electrode including a negative active material layer are stacked with each other with a separator interposed therebetween, in which the positive active material layer contains a positive active material particle, and the positive active material particle has an internal porosity of 15% or less, and the negative active material layer contains a graphite particle, and the graphite particle has an internal porosity of 2% or less.

ADVANTAGES OF THE INVENTION

According to an aspect of the present invention, it is possible to provide an energy storage device having a high input retention ratio after a charge-discharge cycle.

BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

## MODE FOR CARRYING OUT THE INVENTION

As will be appreciated from the following description and examples, matters disclosed herein include the following.

[1]: An energy storage device comprising:

an electrode assembly in which a positive electrode including a positive active material layer and a negative electrode including a negative active material layer are stacked with each other with a separator interposed therebetween, in which
the positive active material layer contains a positive active material particle, and the positive active material particle has an internal porosity of 15% or less, and
the negative active material layer contains a graphite particle, and the graphite particle has an internal porosity of 2% or less.

[2]: The energy storage device according to [1], in which the positive active material particle is a secondary particle.
[3]: The energy storage device according to [1] or [2], in which the positive active material particle contains a lithium transition metal composite oxide having an $\alpha$-NaFeO$_2$-type crystal structure.
[4]: The energy storage device according to any one of the above [1] to [3], in which at least a part of the electrode assembly is in a state of being pressed.

First, an outline of an energy storage device disclosed in the present specification will be described.
An energy storage device according to an aspect of the present invention includes an electrode assembly in which a positive electrode including a positive active material layer and a negative electrode including a negative active material layer are stacked with each other with a separator interposed therebetween, in which the positive active material layer contains a positive active material particle, and the positive active material particle has an internal porosity of 15% or less, and the negative active material layer contains a graphite particle, and the graphite particle has an internal porosity of 2% or less.
The energy storage device has a high input retention ratio after a charge-discharge cycle. The reasons therefor are not clear, but the following reasons are presumed. Usually, in an energy storage device in which a negative active material layer contains a graphite particle, the graphite particle expands in association with charge-discharge, and the positive active material layer is pressed by the expanded negative active material layer with a separator interposed therebetween. When the positive active material layer is pressed, cracking of the positive active material particle in the positive active material layer occurs, and electrical contact inside the positive active material particle, between the positive active material particles, and the like are reduced, so that the input is reduced. In particular, in the case of a positive active material particle having a large internal porosity, cracking easily occurs even if the positive active material particle is not strongly pressed. In addition, since a graphite particle having a large internal porosity expands particularly greatly in association with charge-discharge, even when a positive active material particle having a small internal porosity is used, the positive active material particle is likely to be cracked. On the other hand, in the energy storage device according to an aspect of the present invention, it is presumed that since the graphite particle having a small internal porosity and small expansion in association with charge-discharge and the positive active material particle having a small internal porosity and hardly causing cracking are used, cracking of the positive active material particle is suppressed even when charge-discharge is repeated, and the input retention ratio is high.
The "internal porosity" in the positive active material particle and the graphite particle is the ratio of the area (porosity) of void in the particle to the area of the whole particle in the cross section of the particles observed in a SEM image acquired using a scanning electron microscope (SEM), and can be determined by the following procedure.

(1) Preparation of sample for measurement

The positive electrode and the negative electrode to be measured are each fixed with a thermosetting resin. For the positive electrode and the negative electrode fixed with the resin, the cross section is exposed by an ion milling method to fabricate a sample for measurement.
It is to be noted that the positive electrode and the negative electrode to be measured are prepared in accordance with the following procedure. When the positive electrode and the negative electrode before assembling the energy storage device can be prepared, the positive electrode and the negative electrode are used as they are. In the case of preparing from the assembled energy storage device, first, the energy storage device is subjected to constant current discharge at a current of 0.1 C to an end-of-discharge voltage under normal usage, into a discharged state. The energy storage device in the discharged state is disassembled, the positive electrode and the negative electrode are taken out, components (electrolyte and the like) adhering to the positive electrode and the negative electrode are then sufficiently washed with a dimethyl carbonate, and then, the positive electrode is dried under reduced pressure at room temperature for 24 hours. The operations from the disassembly of the energy storage device to the preparation of the positive electrode and the negative electrode to be measured are performed in a dry air atmosphere with a dew point of -40°C or lower. Here, the "under normal usage" means use of the energy storage device while employing charge-discharge conditions recommended or specified in the energy storage device.

(2) Acquisition of SEM image

For acquiring a SEM image (cross-sectional SEM image), JSM-7001F (manufactured by JEOL Ltd.) is used as a scanning electron microscope. For the SEM image, a secondary electron image is observed. The acceleration voltage is 15 kV. The observation magnification is set such that the number of positive active material particles or graphite particles appearing in one field of view is three or more and fifteen or less. The obtained SEM image is stored as an image file. In addition, various conditions such as spot diameter, working distance, irradiation current, luminance, and focus are appropriately set so as to make the contour of the positive active material particle or the graphite particle clear.

(3) Cutting of contour of positive active material particle or graphite particle

The contour of the positive active material particle or the graphite particle is cut out from the acquired SEM image by using an image cutting function of an image editing software Adobe Photoshop Elements 11. The contour is cut out by using a quick selection tool to select the outside of the contour of the positive active material particle or the graphite particle and edit a portion except for the positive active material particle or the graphite particle to a black background. At this time, when the number of the positive active material particles or the graphite particles from which the contours have been able to be cut out is less than three, the SEM image is acquired again, and the cut-out is performed until the number of the positive active material particles or the graphite particles from which the contours have been able to be cut out becomes three or more.

(4) Binarization processing

The image of the first positive active material particle or graphite particle among the cut-out positive active material particles or the graphite particles is binarized by using image analysis software PopImaging 6.00 to set to a threshold value a concentration 20% lower than a concentration at which the intensity becomes maximum. By the binarization processing, the area on the higher-concentration side is calculated as an "area S1 of void in the particle".
Then, the image of the same first positive active material particle or graphite particle is subjected to binarization processing with a concentration of 10% as a threshold value. The outer edge of the positive active material particle or the graphite particle is determined by the binarization processing, and the area inside the outer edge is calculated to obtain an "area S0 of the whole particle".
The ratio (S 1/S0) of S1 to S0 is calculated with the use of S1 and S0 calculated above to calculate an internal porosity (ratio of the area of void in the particle to the area of the whole particle) R1 in the first positive active material particle or graphite particle.
The images of the second and subsequent positive active material particles or graphite particles among the cut-out positive active material particles or graphite particles are also subjected to the binarization processing described above, and the areas S1 and S0 are calculated. Based on the calculated area S1 and area S0, internal porosities R2, R3, ... of the positive active material particles or the graphite particles are calculated.

(5) Determination of internal porosity

In the positive active material particles or the graphite particles, the average value of all of the internal porosities R1, R2, R3, ... calculated by the binarization processing is calculated to determine the internal porosity.
It is to be noted that, instead of the scanning electron microscope used for "acquisition of SEM image", the image editing software used for "cut-out of contour of positive active material particle or graphite particle", and the image analysis software used for the "binarization processing", apparatuses, software, and the like capable of the corresponding measurement, image editing, and image analysis may be used.
The term "graphite" refers to a carbon material in which the average lattice spacing ($d_{002}$) of the (002) plane determined by an X-ray diffraction method before charge-discharge or in a discharged state is 0.33 nm or more and less than 0.34 nm. In this regard, the "discharged state" of the carbon material means a state discharged such that lithium ions that can be occluded and released in association with charge-discharge are sufficiently released from the carbon material that is a negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

The "separator" refers to a member that electrically isolates the positive active material layer and the negative active material layer from each other while ensuring conductivity of charge transport ions. The separator may be integrated with the positive electrode or the negative electrode, such as a layer provided on the surface of the positive active material layer or the negative active material layer (for example, an inorganic particle layer).

The positive active material particle is preferably a secondary particle. In general, when the positive active material particle is a secondary particle, cracking due to pressing tends to occur. Therefore, when an aspect of the present invention is applied to an energy storage device in which the positive active material particle is a secondary particle, an effect of increasing an input retention ratio after a charge-discharge cycle is particularly remarkably generated.

The "secondary particle" refers to a particle formed by aggregation of a plurality of primary particles. The "primary particle" is a particle in which no grain boundary is observed in appearance in the observation with SEM.

The positive active material particle preferably contains a lithium transition metal composite oxide having an $\alpha$-NaFeO$_2$-type crystal structure. In general, the particle of the lithium transition metal composite oxide having an $\alpha$-NaFeO$_2$-type crystal structure is easily cracked by being pressed. Therefore, when an aspect of the present invention is applied to an energy storage device in which the positive active material particle contains a lithium transition metal composite oxide having an $\alpha$-NaFeO$_2$-type crystal structure, an effect of increasing an input retention ratio after a charge-discharge cycle is particularly remarkably generated.

It is preferable that at least a part of the electrode assembly is in a state of being pressed. When at least a part of the electrode assembly is in a state of being pressed, there is an advantage that an initial input, a discharge capacity, and the like are increased due to an increase in electrical contact between the active material particles, and the like. On the other hand, when at least a part of the electrode assembly is in a state of being pressed, the positive active material particle is easily cracked due to repeated charge-discharge. Therefore, when an aspect of the present invention is applied to an energy storage device in which at least a part of the electrode assembly is in a state of being pressed, an effect of increasing an input retention ratio after a charge-discharge cycle is particularly remarkably generated.

An energy storage device according to an embodiment of the present invention, an energy storage apparatus, a method for manufacturing the energy storage device, and other embodiments will be described in detail. The names of the constituent members (constituent elements) used in the embodiments may be different from the names of the constituent members (constituent elements) used in the background art.

<Energy storage device>

An energy storage device according to an embodiment of the present invention includes: an electrode assembly including a positive electrode, a negative electrode, and a separator; an electrolyte; and a case that houses the electrode assembly and the electrolyte. A positive electrode including a positive active material layer and a negative electrode including a negative active material layer are stacked with each other with a separator interposed therebetween to construct an electrode assembly. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The electrolyte is present in a state of being contained in the positive electrode, the negative electrode, and the separator. The electrolyte may be a nonaqueous electrolyte. A secondary battery will be described as an example of the energy storage device.

(Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of $10^{-2}$ $\Omega \cdot$cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 $\mu$m or more and 50 $\mu$m or less, more preferably 5

μm or more and 40 μm or less, still more preferably 8 μm or more and 30 μm or less, and particularly preferably 10 μm or more and 25 μm or less. The average thickness of the positive substrate falls within the range mentioned above, thereby making it possible to increase the energy density per volume of the energy storage device while increasing the strength of the positive substrate.

The intermediate layer is a layer arranged between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer contains positive active material particles. The positive active material layer contains optional components such as a conductive agent, a binder, a thickener, and a filler, if necessary.

The upper limit of the internal porosity of the positive active material particle contained in the positive active material layer is 15%, preferably 14%, more preferably 13%, still more preferably 12%, even more preferably 11%, and particularly preferably 10%. When the internal porosity of the positive active material particle is equal to or less than the above upper limit, cracking of the positive active material particle due to pressing hardly occurs, and the input retention ratio after a charge-discharge cycle can be increased. The lower limit of the internal porosity of the positive active material particle may be 0%, or may be 0.1%, 1%, 3%, or 5% (for example, 8%). The internal porosity of the positive active material particle may be equal to or more than any of the above lower limits and equal to or less than any of the above upper limits. The internal porosity of the positive active material particle is a value measured for any positive active material particle extracted in the above procedure from among all the positive active material particles contained in the positive active material layer without distinguishing the type of the positive active material.

The positive active material particle having an internal porosity of 15% or less can be manufactured by a known method.

The material constituting the positive active material particle (positive active material) can be appropriately selected from known positive active materials. As a positive active material for a lithium ion secondary battery, a material capable of storing and releasing lithium ions is normally used. Examples of the positive active material include lithium transition metal composite oxides that have an $\alpha$-NaFeO$_2$-type crystal structure, lithium transition metal oxides that have a spinel-type crystal structure, polyanion compounds, chalcogenides, and sulfur. Examples of the lithium transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < \gamma < 1$, $0 < 1-x-y$), Li[Li$_{xC}$o$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$, $0 < 1-x-y$), Li[Li$_x$Ni$_\gamma$Mn$_\beta$Co$_{(1-x-\gamma-\beta)}$]O$_2$ ($0 \leq x < 0.5$, $0 < y$, $0 < B$, $0.5 < \gamma + \beta < 1$, $0 < 1-x-\gamma-\beta$), and Li[Li$_x$Ni$_\gamma$Co$_\beta$Al$_{(1-x-\gamma-\beta)}$]O$_2$ ($0 \leq x < 0.5$, $0 < \gamma$, $0 < \beta$, $0.5 < \gamma + \beta < 1$, $0 < 1-x-\gamma-\beta$). Examples of the lithium transition metal composite oxides that have a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used singly, or two or more thereof may be used in mixture.

The positive active material particle preferably contains a lithium transition metal composite oxide having an $\alpha$-NaFeO$_2$-type crystal structure. The lithium transition metal composite oxide preferably contains a nickel element, a cobalt element, and a manganese or aluminum element, and more preferably contains a nickel element, a cobalt element, and a manganese element. The content of the nickel element with respect to all metal elements other than the lithium element contained in the lithium transition metal composite oxide is preferably 10 mol% or more and 80 mol% or less, and more preferably 20 mol% or more and 60 mol% or less. The content of the cobalt element with respect to all metal elements other than the lithium element contained in the lithium transition metal composite oxide is preferably 10 mol% or more and 60 mol% or less, and more preferably 20 mol% or more and 50 mol% or less. The content of the manganese element with respect to all metal elements other than the lithium element contained in the lithium transition metal composite oxide is preferably 5 mol% or more and 60 mol% or less, and more preferably 10 mol% or more and 50 mol% or less. The use of such a lithium transition metal composite oxide allows the energy density to be increased, for example. In addition, when an embodiment of the present invention is applied to an energy storage device in which the positive active material particle contains such a lithium transition metal composite oxide, an effect of increasing an input retention ratio after a charge-discharge cycle is particularly remarkably generated.

The composition ratio of the lithium transition metal composite oxide refers to a composition ratio before charge-discharge or in the case of a completely discharged state provided by the following method. First, the energy storage device is subjected to constant current discharge at a discharge current of 0.05 C to the lower limit voltage under normal usage. The energy storage device in this state is disassembled to take out the positive electrode, a half cell with metal Li as a counter electrode is assembled, subjected to constant current discharge at a discharge current of 10 mA per 1 g of the positive active material particles until the positive potential reaches 3.0 V vs. Li/Li$^+$ adjust the positive electrode to the completely discharged state. The cell is disassembled again to take out the positive electrode. The components (electrolyte and the like) attached to the positive electrode taken out is sufficiently washed with a dimethyl carbonate, and dried under reduced pressure at room temperature for 24 hours, and the lithium transition metal composite oxide is then collected. The collected lithium transition metal composite oxide is subjected to measurement. The operations from the disassembly of the energy storage device to the collection of the lithium transition metal composite oxide for measurement are performed in a dry air atmosphere at a dew point of -40°C or lower.

One of the materials for the positive active material may be used alone, or two or more thereof may be used in mixture. That is, the positive active material particle may be formed by mixing a plurality of kinds of positive active material particles. Further, each positive active material particle may be composed of a plurality of kinds of positive active materials. The positive active material preferably contains the lithium transition metal composite oxide in a proportion of 50% by mass or more (preferably 70% by mass to 100% by mass, more preferably 80% by mass to 100% by mass), and the positive active material is preferably substantially composed of only the lithium transition metal composite oxide.

The positive active material particle may be a primary particle, but is preferably a secondary particle. When the positive active material particle is a secondary particle, the surface area (reaction area) per mass tends to increase, and the DC resistance per mass tends to decrease. On the other hand, in general, when the positive active material particle is a secondary particle, cracking due to pressing tends to occur. Therefore, when an embodiment of the present invention is applied to an energy storage device in which the positive active material particle is a secondary particle, an effect of increasing an input retention ratio after a charge-discharge cycle is particularly remarkably generated.

The average particle size of the positive active material particles is, for example, preferably 0.1 $\mu$m or more and 20 $\mu$m or less, and more preferably 1 $\mu$m or more and 5 $\mu$m or less (for example, 3 $\mu$m or more and 5 $\mu$m or less). By setting the average particle size of the positive active material particles to be equal to or greater than the above lower limit, the positive active material particles are easily produced or handled. By setting the average particle size of the positive active material particles to be equal to or less than the above upper limit, the electron conductivity of the positive active material layer is improved, and cracking hardly occurs, so that the input retention ratio after a charge-discharge cycle is further increased. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used to obtain positive active material particles with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The positive active material particle may have a BET specific surface area of, for example, 1.2 m$^2$/g or more and 15 m$^2$/g or less (for example, 1.2 m$^2$/g or more and 1.8 m$^2$/g or less). The positive active material particle may have a BET specific surface area of preferably 1.5 m$^2$/g or more and 10 m$^2$/g or less, and more preferably 1.5 m$^2$/g or more and 5.0 m$^2$/g or less. In some embodiments, the positive active material particle may have a BET specific surface area of 2.0 m$^2$/g or more and 5.0 m$^2$/g or less. By setting the BET specific surface area of the positive active material particle within the above range, it is possible to increase the input retention ratio after a charge-discharge cycle and to sufficiently improve other charge-discharge performance.

The "BET specific surface area" of the positive active material particle is a value obtained from an adsorption isotherm using a nitrogen gas adsorption method for the positive active material particle before charge-discharge or when the positive active material particle is brought into a completely discharged state by the following method. First, the energy storage device is subjected to constant current discharge at a discharge current of 0.05 C to the lower limit voltage under normal usage. The energy storage device in this state is disassembled to take out the positive electrode, a half cell with metal Li as a counter electrode is assembled, subjected to constant current discharge at a discharge current of 10 mA per 1 g of the positive active material particles until the positive potential reaches 3.0 V vs. Li/Li$^+$ adjust the positive electrode to the completely discharged state. The cell is disassembled again to take out the positive electrode. The components (electrolyte and the like) attached to the positive electrode taken out is sufficiently washed with a dimethyl carbonate, and dried under reduced pressure at room temperature for 24 hours, and the positive active material particles are then collected. The collected positive active material particles are subjected to measurement. Operations from disassembly of the energy storage device to collection of the positive active material particles for measurement are performed in a dry air atmosphere having a dew point of -40°C or lower.

The BET specific surface area is measured by the following procedures. 1.00 g of the positive active material particles is put in a sample tube for measurement, and dried under reduced pressure at 120°C for 12 hours. Next, by a nitrogen gas adsorption method using liquid nitrogen, an adsorption isotherm is measured in a relative pressure P/P0 (P0 = about 770 mmHg) range of 0 to 1. Five points are extracted from a region with P/P0 = 0.05 to 0.3 of the adsorption isotherm obtained, BET plotting is then performed, and the BET specific surface area is calculated from the y-intercept and slope of the straight line.

The content of the positive active material particles in the positive active material layer is preferably 50% by mass or more and 99% by mass or less, more preferably 70% by mass or more and 98% by mass or less, still more preferably 80% by mass or more and 95% by mass or less. The content of the positive active material particles falls within the range mentioned above, thereby allowing a balance to be achieved between the increased energy density and productivity of the positive active material layer.

The conductive agent is not particularly limited as long as it is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a material in which carbon black and CNT are composited may be used. Among these, carbon black is preferable from the viewpoint of electron conductivity and coatability, and in particular, acetylene black is preferable.

The content of the conductive agent in the positive active material layer is preferably 1% by mass or more and 10% by mass or less, and more preferably 3% by mass or more and 9% by mass or less. The content of the conductive agent falls within the range mentioned above, thereby allowing the energy density of the energy storage device to be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 2% by mass or more and 9% by mass or less. The content of the binder falls within the range mentioned above, thereby allowing the positive active material particles to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance. When the positive active material layer contains a thickener, the content of the thickener in the positive active material layer can be, for example, 0.1% by mass or more and 10% by mass or less. The content of the thickener in the positive active material layer may be 5% by mass or less, 1% by mass or less, or 0% by mass.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. When the positive active material layer contains a filler, the content of the filler in the positive active material layer can be, for example, 0.1% by mass or more and 10% by mass or less. The content of the filler in the positive active material layer may be 5% by mass or less, 1% by mass or less, or 0% by mass.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material particle, the conductive agent, the binder, the thickener, and the filler.

The positive active material layer has a porosity of preferably 30% or more and 50% or less, and more preferably 35% or more and 47% or less (for example, 40% or more and 47% or less). By setting the porosity of the positive active material layer within the above range, for example, the input retention ratio after a charge-discharge cycle can be further increased. The porosity of the positive active material layer can be adjusted by the average particle size of the positive active material particles, the presence or absence of pressing when preparing the positive electrode, the strength, and the like.

The porosity of the active material layer (the positive active material layer and the negative active material layer) refers to a value obtained by the following formula (1) from the true density of the active material layer calculated from the true density of each component constituting the active material layer and the apparent density of the active material layer. The apparent density of the active material layer refers to a value obtained by dividing the mass of the active material layer by the apparent volume of the active material layer. The apparent volume refers to a volume including a gap portion, and can be obtained as a product of the average thickness and area of the active material layer. The average thickness of the active material layer is regarded as an average value of thicknesses measured at any five points.

$$\text{Porosity (\%)} = 100 - (\text{Apparent density/True density}) \times 100 \ldots (1)$$

The mass per unit area of the positive active material layer is not particularly limited, but is preferably 1 mg/cm$^2$ or more and 10 mg/cm$^2$ or less, and more preferably 4 mg/cm$^2$ or more and 8 mg/cm$^2$ or less (for example, 5 mg/cm$^2$ or more and 7.5 mg/cm$^2$ or less). In the energy storage device including the positive active material layer in which the mass per unit area is in the above range, the effect of application of the present configuration can be more suitably exhibited. Here, "the mass per unit area of the positive active material layer" refers to a mass per unit area of one positive active material layer. For example, when the positive electrode has a positive substrate with the positive active material layer provided on each of both surfaces of the positive substrate, "the mass per unit area of the positive active material layer" is a mass per unit area of the positive active material layer on one of the surfaces.

The positive electrode can be fabricated, for example, by applying a positive composite paste to a positive substrate directly or with an intermediate layer interposed therebetween, and drying the paste. After the drying, pressing or the like may be performed, if necessary. The positive composite paste contains components constituting the positive active material layer such as the positive active material particles, and a conductive agent and a binder, which are optional components. The positive composite paste typically further includes a dispersion medium.

(Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 $\mu$m or more and 35 $\mu$m or less, more preferably 3 $\mu$m or more and 30 $\mu$m or less, still more preferably 4 $\mu$m or more and 25 $\mu$m or less, particularly preferably 5 $\mu$m or more and 20 $\mu$m or less. When the average thickness of the negative substrate falls within the range mentioned above, the energy density per volume of the energy storage device can be increased while increasing the strength of the negative substrate.

The negative active material layer contains a graphite particle. The negative active material layer contains other negative active material other than the graphite particle, and optional components such as a conductive agent, a binder, a thickener, and a filler as necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as components other than the graphite particle and other negative active material, the conductive agent, the binder, the thickener, and the filler.

The graphite particle is a component that functions as a negative active material. The upper limit of the internal porosity of the graphite particle contained in the negative active material layer is 2%, preferably 1%, more preferably 0.5%, and still more preferably 0.1%. When the internal porosity of the graphite particle is equal to or less than the above upper limit, expansion of the graphite particle during charge-discharge is suppressed, and pressing to the positive active material layer by the expanded negative active material layer is suppressed, so that cracking of the positive active material particle is suppressed, and as a result, the input retention ratio after a charge-discharge cycle can be increased. The lower limit of the internal porosity of the graphite particle may be 0% or 0.01%. The internal porosity of the graphite particle may be equal to or more than any of the above lower limits and equal to or less than any of the above upper limits. The internal porosity of the graphite particle is a value measured for any graphite particle extracted in the above procedure from among all the graphite particles contained in the negative active material layer without distinguishing the type of the graphite particle.

The graphite particle having an internal porosity of 2% or less can be obtained by subjecting conventional general graphite to a compression treatment or the like.

The graphite particle may be natural graphite or artificial graphite, but is preferably natural graphite. When the graphite particle is natural graphite, for example, the initial resistance of the energy storage device can be reduced, and the input retention ratio after a charge-discharge cycle can be further increased.

The natural graphite is a generic term for graphite obtained from natural resources. The graphite particle composed of natural graphite may be spheroidized natural graphite particles obtained by spheroidizing scale-like natural graphite or the like. The natural graphite may have four peaks appearing at diffraction angles $2\theta$ in the range from $40°$ to $50°$ in an X-ray diffraction pattern obtained with the use of $CuK\alpha$, measured before charge-discharge or in a discharged state. These four peaks are considered to be two peaks derived from a hexagonal structure and two peaks derived from a rhombohedral structure. In the case of artificial graphite, generally, only two peaks derived from a hexagonal structure are considered to appear. In the X-ray diffraction pattern, the ratio ((012)/(100)) of the peak intensity derived from the (012) plane to the peak intensity derived from the (100) plane is preferably 0.3 or more, and more preferably 0.4 or more. The ratio of the peak intensities ((012)/(100)) is preferably 0.6 or less. In this regard, the (100) plane is derived from the hexagonal structure, and the (012) plane is derived from the rhombohedral structure.

The average particle size of the graphite particles is preferably 1 $\mu$m or more and 25 $\mu$m or less, more preferably 4 $\mu$m or more and 20 $\mu$m or less, and still more preferably 5 $\mu$m or more and 15 $\mu$m or less (for example, 6 $\mu$m or more and less than 10 $\mu$m). When the average particle size of the graphite particles is in the above range, for example, the input retention ratio after a charge-discharge cycle can be further increased. In order to obtain graphite particles having a predetermined particle size, a crusher, a classifier, or the like is used. A crushing method and a classification method can be selected from, for example, the methods exemplified for the positive active material particle.

The content of the graphite particles in the negative active material layer is preferably 60% by mass or more and 99% by mass or less, more preferably 90% by mass or more and 98% by mass or less, and is still more preferably 95% by mass or more, 97% by mass or more, or 98% by mass or more in some cases. By setting the content of the graphite particles in the above range, it is possible to achieve both high energy density and productivity of the negative active material layer, and the input retention ratio after a charge-discharge cycle can be further increased.

The negative active material layer may contain other negative active materials besides the graphite particles. As other negative active material, various conventionally known negative active materials can be used. However, the content of the graphite particles in all the negative active materials contained in the negative active material layer is preferably 90% by mass or more, more preferably 99% by mass or more, and may be substantially 100% by mass. When an embodiment of the present invention is applied to an energy storage device in which graphite particles are mainly used as a negative active material, an effect of increasing an input retention ratio after a charge-discharge cycle is particularly remarkably generated.

When the conductive agent is contained in the negative active material layer, the content of the conductive agent in the negative active material layer may be, for example, 1% by mass or more and 10% by mass or less. The content of the conductive agent in the negative active material layer is preferably 5% by mass or less, and may be more preferably 2% by mass or less, 1% by mass or less, 0.1% by mass or less, or 0% by mass. When the content of the conductive agent in the negative active material layer is small or the conductive agent is not contained, the content of the negative active material such as graphite particles can be increased, so that the energy density can be increased, for example. The graphite particle in the negative active material layer does not correspond to the conductive agent in the negative active material layer without distinguishing the type of the graphite particle.

The content of the binder in the negative active material layer is preferably 0.1% by mass or more and 10% by mass or less, more preferably 1% by mass or more and 5% by mass or less. By setting the binder content to the above range, the graphite particle and the like can be stably held.

When the negative active material layer contains a thickener, the content of the thickener in the negative active material layer is preferably 0.1% by mass or more and 5% by mass or less.

When the negative active material layer contains a filler, the content of the filler in the negative active material layer can be, for example, 0.1% by mass or more and 10% by mass or less. The content of the filler in the negative active material layer may be 5% by mass or less, 1% by mass or less, or 0% by mass. When the content of the filler in the negative active material layer is small or the filler is not contained, the content of the negative active material such as graphite particles can be increased, so that the energy density can be increased, for example.

The negative active material layer has a porosity of preferably 35% or more and 50% or less, and more preferably 37% or more and 45% or less. By setting the porosity of the negative active material layer to be equal to or less than the above upper limit, the energy density is increased. On the other hand, in general, as the porosity of the negative active material layer is lower, the negative active material layer is more likely to expand in association with charge-discharge. On the other hand, in the energy storage device according to an embodiment of the present invention, since the graphite particles having an internal porosity of 2% or less are used, even when the porosity of the negative active material layer is relatively low, expansion of the negative active material layer in association with charge-discharge is small, and the input retention ratio after a charge-discharge cycle can be increased.

The mass per unit area of the negative active material layer is not particularly limited, but is preferably 1 mg/cm$^2$ or more and 10 mg/cm$^2$ or less, and more preferably 2 mg/cm$^2$ or more and 5 mg/cm$^2$ or less. In the energy storage device including the negative active material layer in which the mass per unit area is in the above range, the effect of application of the present configuration can be more suitably exhibited. Here, "the mass per unit area of the negative active material layer" refers to a mass per unit area of one negative active material layer. For example, when the negative electrode has a negative substrate with the negative active material layer provided on each of both surfaces of the negative substrate, "the mass per unit area of the negative active material layer" is a mass per unit area of the negative active material layer on one of the surfaces.

The negative electrode can be prepared, for example, by applying a negative composite paste to a negative substrate directly or via an intermediate layer, followed by drying. After the drying, pressing or the like may be performed, if necessary. In the negative electrode, since the graphite particles having an internal porosity of 2% or less are used, a sufficiently high density negative active material layer can be formed without performing pressing or even when the strength of pressing is relatively weak. The negative composite paste contains components constituting the negative active material layer such as a graphite particle, and a conductive agent and a binder, which are optional components. The negative composite paste typically further contains a dispersion medium.

(Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the electrolyte. As the material of the substrate layer of the separator, a polyolefin such as polyethylene or polypropylene is preferable from the viewpoint of a shutdown function, and polyimide, aramid or the like is preferable from the viewpoint of resistance to oxidation and decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used singly, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The term "porosity" herein is a volume-based value, and means a value measured with a mercury porosimeter.

As the separator, a polymer gel composed of a polymer and an electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, a polymer gel may be used in combination with a porous resin film, a nonwoven fabric, or the like as described above.

As described above, the separator may be a layer integrated with the positive electrode or the negative electrode. Examples of such a layer include an inorganic particle layer stacked on the surface of the positive active material layer or the negative active material layer. The inorganic particle layer is, for example, a layer containing the inorganic particles and a binder. Such a layer as a separator is usually an insulating porous layer.

(Electrolyte)

The electrolyte can be appropriately selected from known electrolytes. For the electrolyte, a nonaqueous electrolyte may be used, or a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some hydrogen atoms contained in these compounds are substituted with halogen atoms may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2Fs)_2$, $LiN(SO_2CF_3)(SO_2C_4F_9)$, $LiC(SO_2CF_3)_3$, and $LiC(SO_2C_2F_5)_3$. Among these salts, an inorganic lithium salt is preferable, and $LiPF_6$ is more preferable.

The content of the electrolyte salt in the nonaqueous electrolyte solution is, at 20°C and 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the additive falls within the range mentioned above, thereby making it possible to improve capacity retention performance or cycle performance after high-temperature storage, and to further improve safety.

As the electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

Examples of the lithium ion secondary battery include $Li_2S-P_2S_5$, $LiI-Li_2S-P_2S_5$, and $Li_{10}Ge-P_2S_{12}$ as the sulfide solid electrolyte.

(Pressing of electrode assembly and the like)

At least a part of the electrode assembly may be in a state of being pressed in the case. Specifically, at least a part of the electrode assembly may be in a state of being pressed in a thickness direction (stacking direction) of each layer. A part of the electrode assembly (for example, a pair of curved parts or the like of a flattened wound-type electrode assembly) may not be in a state of being pressed. In addition, parts of flat portions of a stacked-type electrode assembly and of a flattened wound-type electrode assembly, for example, the central portion thereof, may be only partially in a state of being pressed. When at least a part of the electrode assembly is in a state of being pressed, an initial input is increased due to an increase in electrical contact between the active material particles, and the like. Also, when an embodiment of the present invention is applied to an energy storage device in which at least a part of the electrode assembly is in a state of being pressed, an effect of increasing an input retention ratio after a charge-discharge cycle is particularly remarkably generated.

The pressing (application of a load) to at least a part of the electrode assembly can be performed by, for example, a pressurizing member that pressurizes the case from the outside. The pressurizing member may be a restraining member that restrains the shape of the case. The pressurizing member (restraining member) is provided so as to sandwich and then press at least a part of the electrode assembly from both surfaces in the thickness direction via the case, for example. The surfaces of the electrode assembly to be pressed have contact with the inner surface of the case directly or with another member interposed therebetween. Thus, at least a part of the electrode assembly is pressed by pressurizing the case. Examples of the pressurizing member (restraining member) include a restraining band and a metallic frame. For example, a metallic frame may be configured to apply an adjustable load with a bolt or the like. Also, the plurality of energy storage devices may be arranged side by side in the thickness direction of the electrode assembly, and fixed with the use of a frame or the like with the plurality of energy storage devices pressurized from both ends in the thickness direction. In addition, at least a part of the electrode assembly can be brought into a state of being pressed by a method without using a pressurizing member or the like, such as depressurizing the inside of the case.

The pressure applied to the electrode assembly in which at least a part of the electrode assembly is in a state of being pressed is preferably 0.01 MPa or more and 5 MPa or less, and more preferably 0.1 MPa or more and 1 MPa or less. Here, the pressure applied to the electrode assembly is a value measured by the following method.

First, the energy storage device is subjected to constant current discharge to the lower limit voltage under normal usage, and then installed in an X-ray computed tomography (CT) apparatus. Scanning is performed along a direction parallel to the thickness direction of the electrode assembly to check whether or not the electrode assembly is in direct or indirect contact with the inner surface of the case. When the surface of the electrode assembly is not in direct or indirect contact with the inner surface of the case, the pressure applied to the electrode assembly is set to 0 MPa (the electrode assembly is not in a state of being pressed). When the electrode assembly is in direct or indirect contact with the inner surface of the case, an X-ray transmission image of the electrode assembly is captured, and the maximum thickness of the electrode assembly in the stacking direction is measured. The energy storage device is disassembled, and the electrode assembly is taken out and installed in the autograph. A load is gradually applied to the electrode assembly by the autograph, and the electrode assembly is compressed to the maximum thickness in the thickness direction of the electrode assembly measured from an X-ray transmission image. At this time, the load measured by the autograph is defined as a load applied to the electrode assembly. A value obtained by dividing the load applied to the electrode assembly by an area of a contact surface between the autograph and the electrode assembly is defined as the pressure applied to the electrode assembly. Usually, a load is applied to the pair of opposing surfaces of the electrode assembly by the case, and the area of only one surface of the pair of surfaces is defined as the area of the surface to which the load is applied.

In the energy storage device according to an embodiment of the present invention, the case may be restrained with a constant thickness (constant size) by a pressurizing member or the like. In this case, at least a part of the electrode assembly may or may not be in a pressed state. For example, even when the electrode assembly is not in a pressed state immediately after the manufacture of the energy storage device, as a result of expansion of the electrode assembly with the charge-discharge cycle, at least a part of the electrode assembly may be in a pressed state by a case which is restrained by a pressurizing member or the like.

The shape of the energy storage device according to the present embodiment is not to be considered particularly limited, and examples thereof include cylindrical batteries, prismatic batteries, flattened batteries, coin batteries and button batteries.

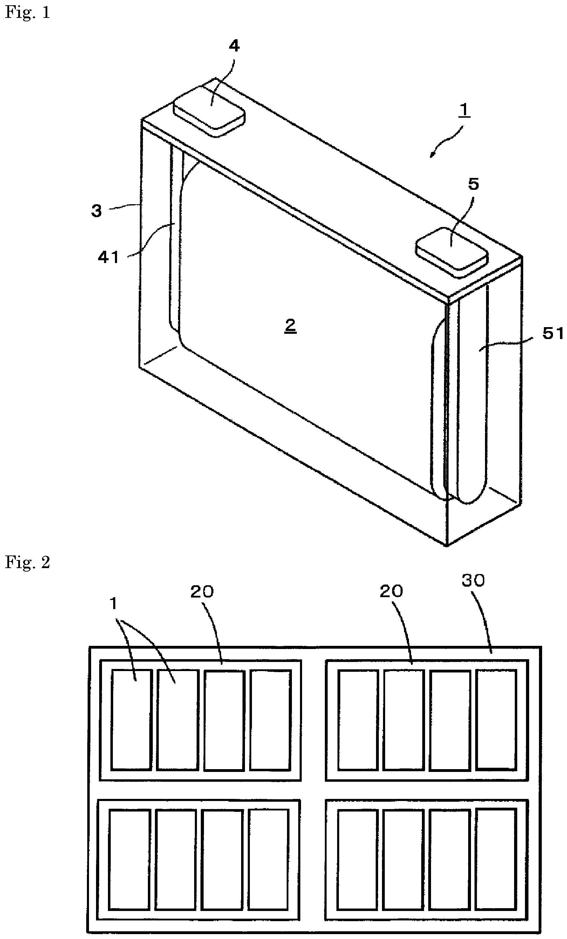

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

<Energy storage apparatus>

The energy storage device according to the present embodiment can be mounted as an energy storage unit (battery module) configured with a plurality of energy storage devices assembled, on power sources for automobiles such as electric vehicles (EV), hybrid vehicles (HEV), and plug-in hybrid vehicles (PHEV), power sources for electronic devices such as personal computers and communication terminals, power sources for power storage, or the like. In this case, the technique of the present invention may be applied to at least one energy storage device included in the energy storage unit.

Fig. 2 shows an example of an energy storage apparatus 30 formed by assembling energy storage units 20 in each of which two or more electrically connected energy storage devices 1 are assembled. The energy storage apparatus 30 may include a busbar (not illustrated) for electrically connecting two or more energy storage devices 1, a busbar (not illustrated) for electrically connecting two or more energy storage units 20, and the like. The energy storage unit 20 or the energy storage apparatus 30 may include a state monitor (not shown) that monitors the state of one or more energy storage devices.

<Method for manufacturing energy storage device>

A method for manufacturing the energy storage device of the present embodiment can be appropriately selected from known methods. The manufacturing method includes, for example, preparing an electrode assembly, preparing an electrolyte, and housing the electrode assembly and the electrolyte in a case. Preparing the electrode assembly includes: preparing a positive electrode and a negative electrode, and forming an electrode assembly by stacking or winding the positive electrode and the negative electrode with a separator interposed therebetween.

Housing the electrolyte in a case can be appropriately selected from known methods. For example, when a nonaqueous electrolyte solution is used for the electrolyte, the nonaqueous electrolyte solution may be injected from an inlet formed in the case, followed by sealing the inlet. The manufacturing method may further include pressurizing the case housing the electrode assembly from the outside or depressurizing the inside of the case housing the electrode assembly to bring at least a part of the electrode assembly into a state of being pressed.

<Other embodiments>

It is to be noted that the energy storage device according to the present invention is not limited to the embodiment mentioned above, and various changes may be made without departing from the scope of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, dimensions, capacity, and the like of the energy storage device are arbitrary. The present invention can also be applied to various secondary batteries, and capacitors such as electric double layer capacitors and lithium ion capacitors. The present invention can also be applied to an energy storage device in which an aqueous electrolyte solution is used as an electrolyte.

EXAMPLES

Hereinafter, the present invention will be described in more detail with reference to examples, but the present invention is not limited to the following examples.

[Example 1]

(Fabrication of positive electrode)

As positive active material particles, $LiNi_{1/3}Co_{1/3}Mn_{1/3}O_2$ (positive active material particles A1) as secondary particles having an internal porosity of 10%, an average particle size of 4 $\mu$m, and a BET specific surface area of 1.5 $m^2$/g was prepared.

A positive composite paste was prepared using the positive active material particles A1, acetylene black (AB) as a conductive agent, a polyvinylidene fluoride (PVDF) as a binder, and an N-methylpyrrolidone (NMP) as a dispersion medium. It is to be noted that the mass ratios of the positive active material particles A1, AB, and PVDF were set to be 93 : 4.5 : 2.5 (in terms of solid content). The positive composite paste was applied to both surfaces of an aluminum foil as a positive substrate, and dried. Thereafter, roll pressing was performed to obtain a positive electrode. The positive active material layer in the obtained positive electrode had a porosity of 45%, and the mass per unit area of the positive active material layer was 7 mg/$cm^2$.

(Fabrication of negative electrode)

As graphite particles, graphite particles A having an internal porosity of 0.03% and an average particle size of 8 $\mu$m were prepared. The graphite particles A were prepared by compressing natural graphite.

The graphite particles A, a styrene-butadiene rubber (SBR) as a binder, carboxymethyl cellulose (CMC) as a thickener, and water as a dispersion medium were used to prepare a negative composite paste. It is to be noted that the mass ratios of the graphite particles A, SBR, and CMC were set to be 98 : 1 : 1 (in terms of solid content). The negative composite paste was applied to both surfaces of a copper foil as a negative substrate, and dried. Thereafter, roll pressing was performed to obtain a negative electrode. The negative active material layer in the obtained negative electrode had a porosity of 40%, and the mass per unit area of the negative active material layer was 4 mg/cm$^2$.

(Electrolyte)

LiPF$_6$ was dissolved at a concentration of 1.2 mol/dm$^3$ in a solvent obtained by mixing ethylene carbonate, ethyl methyl carbonate and dimethyl carbonate at a volume ratio of 30 : 35 : 35 to obtain an electrolyte.

(Separator)

A polyolefin microporous membrane was used for the separator.

(Assembly of energy storage device)

The positive electrode, the negative electrode, and the separator were used to obtain a flattened wound-type electrode assembly. The electrode assembly was housed in a prismatic case, the electrolyte was injected into the case, and the case was sealed to obtain an energy storage device according to Example 1. In the energy storage device, the case of the energy storage device was restrained in the thickness direction by the restraining member, and the flat portion of the electrode assembly was brought into a state of being pressed.

[Example 2 and Comparative Examples 1 to 4]

Energy storage devices according to Example 2 and Comparative Examples 1 to 4 were obtained similarly to Example 1, except for using the positive active material particles and the graphite particles listed in Table 1.
Physical properties and the like of each positive active material particle and each graphite particle in Table 1 are as follows.

Positive active material particle A1: Internal porosity: 10%, average particle size: 4 $\mu$m, BET specific surface area: 1.5 m$^2$/g, LiNi$_{1/3}$Co$_{1/3}$Mn$_{1/3}$O$_2$(secondary particle)
Positive active material particle A2: Internal porosity: 10%, average particle size: 4 $\mu$m, BET specific surface area: 1.5 m$^2$/g, LiNi$_{0.50}$Co$_{0.35}$Mn$_{0.15}$O$_2$ (secondary particle)
Positive active material particle B1: Internal porosity: 19%, average particle size: 4 $\mu$m, BET specific surface area: 2 m$^2$/g, LiNi$_{1/3}$Co$_{1/3}$Mn$_{1/3}$O$_2$ (secondary particle)
Graphite particle A: Internal porosity: 0.03%, average particle size: 8 $\mu$m
Graphite particle B: Internal porosity: 3%, average particle size: 10 $\mu$m

[Evaluation]

(1) Initial charge-discharge

The obtained respective energy storage devices were subjected to initial charge-discharge under the following conditions. In a thermostatic chamber at 25°C, the nonaqueous electrolyte energy storage devices were subjected to constant current charge at a charge current of 1.0 C and an end-of-charge voltage of 4.1 V, and then to constant voltage charge at 4.1 V. With regard to the charge termination conditions, the charge was performed until the total charge time reached 3 hours. Thereafter, a pause of 10 minutes was provided. The energy storage devices were subjected to constant current discharge at a discharge current of 1.0 C and an end-of-discharge voltage of 3.0 V.

(2) Initial input

Each energy storage device after the initial charge-discharge was subjected to constant current charge at a current of 1.0 C at 25°C to set the SOC to 55%. Subsequently, the energy storage device was charged with electricity at a current of 2 C, 4 C, 6 C, 12 C, or 18 C for 10 seconds. After completion of each charge, constant current discharge was performed at a current of 0.5 C to set the SOC to 55%. The relationship between the current at each charge and the voltage at 1 second after the start of charge was plotted, and the DC resistance was determined from the slope of a straight line obtained from the plot of 5 points. An input (input power; W) at 1 second after the start of charge was calculated from the obtained DC resistance, according to the formula of {difference between voltage before charge and upper limit voltage (4.3 V)}/DC resistance × upper limit voltage (4.3 V), and used as an initial input.

(3) Charge-discharge cycle test

Then, each energy storage device was subjected to constant current discharge at a current of 1.0 C at 25°C, to set the SOC to 0%, and then subjected to constant current charge to SOC 50% at a current of 0.5 C. Subsequently, the energy storage device was stored in a thermostatic chamber at 55°C for 4 hours. Subsequently, constant current charge was performed up to a voltage corresponding to SOC 80% at a current of 8 C, and then constant current discharge was performed up to a voltage corresponding to SOC 20% at a current of 8 C. The charge and discharge cycles were repeated for 250 hours without a pause time after the charge and discharge.

(3) Input after charge-discharge cycle test

Thereafter, the input after the charge-discharge cycle test was determined by the same procedure as the procedure for determining the initial input. For each energy storage device, the percentage of the input after the charge-discharge cycle test with respect to the initial input was obtained and taken as an input retention ratio. The results are shown in Table 1.

[Table 1]

| | Positive active material particle | | | Graphite particle | | Input retention ratio (%) |
|---|---|---|---|---|---|---|
| | - | Internal porosity (%) | Composition | - | Internal porosity (%) | |
| Example 1 | A1 | 10 | $LiNi_{1/3}Co_{1/3}Mn_{1/3}O_2$ | A | 0.03 | 97 |
| Example 2 | A2 | 10 | $LiNi_{0.50}Co_{0.35}Mn_{0.15}O_2$ | A | 0.03 | 95 |
| Comparative Example 1 | A1 | 10 | $LiNi_{1/3}Co_{1/3}Mn_{1/3}O_2$ | B | 3 | 92 |
| Comparative Example 2 | B | 19 | $LiNi_{1/3}Co_{1/3}Mn_{1/3}O_2$ | A | 0.03 | 92 |
| Comparative Example 3 | B | 19 | $LiNi_{1/3}Co_{1/3}Mn_{1/3}O_2$ | B | 3 | 93 |
| Comparative Example 4 | A2 | 10 | $LiNi_{0.50}Co_{0.35}Mn_{0.15}O_2$ | B | 3 | 92 |

As shown in Table 1, each of the energy storage devices of Examples 1 and 2 in which the positive active material particles A1 and A2 having an internal porosity of 15% or less and the graphite particles A having an internal porosity of 2% or less were used had an input retention ratio of 95% or more, so that the input retention ratio after a charge-discharge cycle was higher as compared with Comparative Examples 1 to 4.

From the comparison between Comparative Example 1 and Comparative Example 3, when the graphite particle had an internal porosity exceeding 2%, the effect of improving the input retention ratio by using a positive active material particle having an internal porosity of 15% or less as the positive active material particle could not be confirmed. Also, from the comparison between Comparative Example 2 and Comparative Example 3, when the positive active material particle had an internal porosity exceeding 15%, the effect of improving the input retention ratio by using a graphite particle having an internal porosity of 2% or less as the graphite particle could not be confirmed. It could be confirmed that the effect of increasing the input retention ratio after a charge-discharge cycle was exhibited only by using the positive active material particle having an internal porosity of 15% or less and the graphite particle having an internal porosity of 2% or less in combination.

INDUSTRIAL APPLICABILITY

The present invention can be applied to an energy storage device used as a power source for electronic devices such as personal computers and communication terminals, motor vehicles, and the like.

DESCRIPTION OF REFERENCE SIGNS

    1: Energy storage device

2: Electrode assembly
3: Case
4: Positive electrode terminal
41: Positive electrode lead
5:Negative electrode terminal
51: Negative electrode lead
20: Energy storage unit
30: Energy storage apparatus

**Claims**

1. An energy storage device comprising:

    an electrode assembly in which a positive electrode including a positive active material layer and a negative electrode including a negative active material layer are stacked with each other with a separator interposed therebetween, wherein
    the positive active material layer contains a positive active material particle, and the positive active material particle has an internal porosity of 15% or less, and
    the negative active material layer contains a graphite particle, and the graphite particle has an internal porosity of 2% or less.

2. The energy storage device according to claim 1, wherein the positive active material particle is a secondary particle.

3. The energy storage device according to claim 1 or 2, wherein the positive active material particle contains a lithium transition metal composite oxide having an $\alpha$-NaFeO$_2$-type crystal structure.

4. The energy storage device according to claim 1 or 2, wherein at least a part of the electrode assembly is in a state of being pressed.

Fig. 1

Fig. 2

## INTERNATIONAL SEARCH REPORT

| International application No. |
| --- |
| **PCT/JP2023/024925** |

### A. CLASSIFICATION OF SUBJECT MATTER

***H01M 10/052***(2010.01)i; ***H01G 11/24***(2013.01)i; ***H01G 11/42***(2013.01)i; ***H01G 11/46***(2013.01)i; ***H01M 4/131***(2010.01)i;
***H01M 4/133***(2010.01)i; ***H01M 4/505***(2010.01)i; ***H01M 4/525***(2010.01)i; ***H01M 4/587***(2010.01)i; ***H01M 10/054***(2010.01)i
FI: H01M10/052; H01G11/24; H01G11/42; H01G11/46; H01M4/131; H01M4/133; H01M4/505; H01M4/525; H01M4/587;
H01M10/054

According to International Patent Classification (IPC) or to both national classification and IPC

### B. FIELDS SEARCHED

Minimum documentation searched (classification system followed by classification symbols)

H01M10/052; H01G11/24; H01G11/42; H01G11/46; H01M4/131; H01M4/133; H01M4/505; H01M4/525; H01M4/587;
H01M10/054

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022/130982 A1 (PANASONIC INTELLECTUAL PROPERTY MANAGEMENT CO., LTD.) 23 June 2022 (2022-06-23) claim 1, paragraphs [0022]-[0049] | 1-4 |
| Y | JP 2021-193673 A (SAMSUNG SDI CO., LTD.) 23 December 2021 (2021-12-23) claims 1-4, paragraphs [0007]-[0015] | 1-4 |
| Y | WO 2022/070817 A1 (PANASONIC INTELLECTUAL PROPERTY MANAGEMENT CO., LTD.) 07 April 2022 (2022-04-07) claim 1, paragraphs [0020]-[0022] | 1-4 |
| Y | JP 2019-102231 A (GS YUASA CORP.) 24 June 2019 (2019-06-24) claim 1, paragraph [0007] | 4 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 August 2023** | **05 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/024925**

| Patent document cited in search report | | | Publication date (day/month/year) | Patent family member(s) | | | Publication date (day/month/year) |
|---|---|---|---|---|---|---|---|
| WO | 2022/130982 | A1 | 23 June 2022 | (Family: none) | | | |
| JP | 2021-193673 | A | 23 December 2021 | US | 2020/0083536 | A1 | |
| | | | | claims 1-4, paragraphs [0011]-[0026] | | | |
| | | | | EP | 3621132 | A1 | |
| | | | | KR | 10-2020-0028637 | A | |
| | | | | CN | 110885083 | A | |
| WO | 2022/070817 | A1 | 07 April 2022 | (Family: none) | | | |
| JP | 2019-102231 | A | 24 June 2019 | US | 2020/0395578 | A1 | |
| | | | | claim 1, paragraph [0007] | | | |
| | | | | WO | 2019/105840 | A1 | |
| | | | | CN | 111316466 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005222933 A
- JP 2017069039 A